# EUROPEAN PATENT SPECIFICATION

(11) **EP 3 325 851 B1**
(45) Date of publication and mention of the grant of the patent: **06.02.2019**
(21) Application number: 15747323.2
(22) Date of filing: 23.07.2015
(51) Int. Cl.: F16H 61/24, F16H 59/04, F16H 61/36, F16H 63/20

(54) **GEAR SET SELECTION SYSTEM FOR A VEHICLE**
ZAHNRADSATZAUSWAHLSYSTEM FÜR EIN FAHRZEUG
SYSTÈME DE SÉLECTION DE TRAIN D'ENGRENAGES POUR UN VÉHICULE

(43) Date of publication of application: 30.05.2018
(73) Proprietor: Kongsberg Driveline Systems I, Inc., Novi, MI 48377 (US)
(72) Inventor: LOVE, Jonathan, Warner, Waterford, MI 48327 (US); BEHOUNEK, Jeff, Macomb, MI 48042 (US); TOWNE, Raymond, Novi, MI 48377 (US)
(74) Representative: Uexküll & Stolberg
(86) International application number: PCT/US2015/041771
(87) International publication number: WO 2017/014789

(56) References cited:
- EP-A1- 1 571 374
- WO-A1-2014/205068
- DE-A1-102006 055 181

## Description

### BACKGROUND OF THE INVENTION

### 1. Field of the Invention

The present invention generally relates to a gear set selection system for a vehicle.

### 2. Description of Related Art

A gear set selection system is used in a vehicle for selecting between a plurality of gears sets. Gear set selection systems include a shifter assembly engageable by an operator, a transmission with a plurality of gears sets, and a motion transmitting device for transferring motion of the shifter assembly to the transmission for selecting between the plurality of gears sets.

The transmission includes a transmission plate defining a plurality of paths with each of the plurality of paths associated with one of the plurality of gears. The transmission includes a selector movably disposed in the transmission plate between the plurality of paths for selecting between the plurality of gears. The shifter assembly includes a shift lever engageable by an operator and a guide for guiding movement of the shift lever. The guide defines a plurality of tracks with each of the plurality of tracks associated with one of the plurality of paths. The motion transmitting device transfers motion of the shift lever to the selector for selecting between a plurality of gears sets.

WO 2014/205068 A1 discloses a gear set selection system comprising the features of the preamble of claim 1.

Although gear set selection systems for selecting between a plurality of gears are used in many vehicles, misalignment between the transmission and shifter assembly can occur due to elastic deformation of the motion transmitting devices and tolerances the gear set selection systems. As such, there remains an opportunity for a gear set selection system to account for elastic deformation of the motion transmitting device and tolerances of the gear set selection system.

According to the present invention, the aforementioned problem is solved by a gear set selection system according to claim 1.

Preferred embodiments are laid down in the dependent claims.

### SUMMARY OF THE INVENTION AND ADVANTAGES

The subject invention includes a gear set selection system for a vehicle. The gear set selection system includes a transmission assembly including a first gear set and a second gear set spaced from each other. The transmission assembly includes a transmission plate having a protrusion and a first path associated with the first gear set and a second path associated with the second gear set. The second path is separated from the first path by the protrusion. The protrusion defines a first wall facing the first path and a second wall facing the second path. The protrusion defines a third wall interconnecting the first and second walls. The transmission assembly also includes a selector movably disposed in the transmission plate between the first and second paths about the protrusion for switching between the first and second gear sets.

The gear set selection system also includes a shifter assembly having a housing and a shift lever coupled to the housing with the shift lever having a first end and a second end spaced from each other. The shifter assembly includes a rotational mechanism coupled to the housing and the shift lever between the first and second ends to support the shift lever on the housing. The shifter assembly further includes a guide coupled to the housing spaced from the rotational mechanism. The guide has a projection and a first track associated with the first path along with a second track associated with the second path with the second track separated from the first track by the projection. The projection defines a first side facing the first track and a second side facing the second track with a third side interconnecting the first and second sides. The shift lever is movably disposed in the guide between the first and second tracks about the projection.

The gear set selection system includes a motion transmitting device having a first terminal end and a second terminal end spaced from each other. The first terminal end is coupled to the shift lever and the second terminal end coupled to the selector for transferring movement of the shift lever to the selector.

A first projection length of travel of the first side and a first protrusion length of travel of the first wall define a first ratio relative to each other. A second projection length of travel of the second side and a second protrusion length of travel of the second wall define a second ratio relative to each other. The first ratio is disproportional to the second ratio such that movement of the shift lever from the first track to the second track about the projection is altered in comparison to movement of the selector from the first path to the second path about the protrusion to overcome elastic deformation of the motion transmitting device to ensure the selector is disposed in the second path when the shift lever is disposed in the second track.

Advantageously, the disproportion between the first and second ratios accounts for any elastic deformation of the motion transmitting device and tolerances of the gear set selection system to ensure the shift lever and selector maintain a desired concurrent movement.

### BRIEF DESCRIPTION OF THE DRAWINGS

Other advantages of the present invention will be readily appreciated, as the same becomes better understood by reference to the following detailed description when considered in connection with the accompanying drawings.
Figure 1 is a partially schematic view of a gear set selection system in accordance with the subject invention.
Figure 2 is a partially fragmented perspective view of a transmission actuator.
Figure 3 is a fragmented rear view of the transmission actuator.
Figure 4 is perspective view of a transmission plate and selector of the transmission actuator of Figure 2.
Figure 5 is another perspective view of the transmission plate and selector of the transmission actuator of Figure 2.
Figure 6 is an enlarged plan view of the transmission plate of the transmission actuator of Figure 2.
Figure 7 is a schematic illustration of a portion of the transmission plate of the transmission actuator of Figure 2.
Figure 8 is a perspective view of a shifter assembly in accordance with the subject invention.
Figure 9 is a partially cross-sectional side view of the shifter assembly of Figure 8.
Figure 10 is a perspective view of various sub components of the shifter assembly of Figure 8.
Figure 11 is a perspective view of another shifter assembly in accordance with the subject invention.
Figure 12 is a perspective view of certain sub components of the shifter assembly of Figure 11.
Figure 13 is another perspective view of other sub components of the shifter assembly of Figure 11.
Figure 14 is a top view of a base of a housing of the shifter assembly of Figure 11 illustrating a guide of the shifter assembly.
Figure 15 is a bottom view of the base of the housing of the shifter assembly of Figure 11.
Figure 16 is a front view of the base of the housing of the shifter assembly of Figure 11.
Figure 17 is a side view of the base of the housing of the shifter assembly of Figure 11.
Figure 18 is an enlarged fragmented plan view of the guide of the shifter assembly of Figure 11.
Figure 19 is a schematic illustration of a portion of the guide of the shifter assembly of Figure 11
Figure 20 is a schematic illustration of the guide of the shifter assembly transposed above the transmission plate of the transmission actuator.
Figure 21 is a fragmented schematic representation of a relative overlay of the guide and the transmission plate.
Figure 22 is a fragmented partially cross-sectional side view of the shift lever within a track of the guide.
Figure 23 is another fragmented partially cross-sectional side view of the shift lever within an alternative track of the guide.
Figure 24 is yet another fragmented partially cross-sectional side view of the shift lever within an alternative track of the guide.
Figure 25 is another fragmented partially cross-sectional side view of the shift lever within an alternative track of the guide.

### DETAILED DESCRIPTION OF THE INVENTION

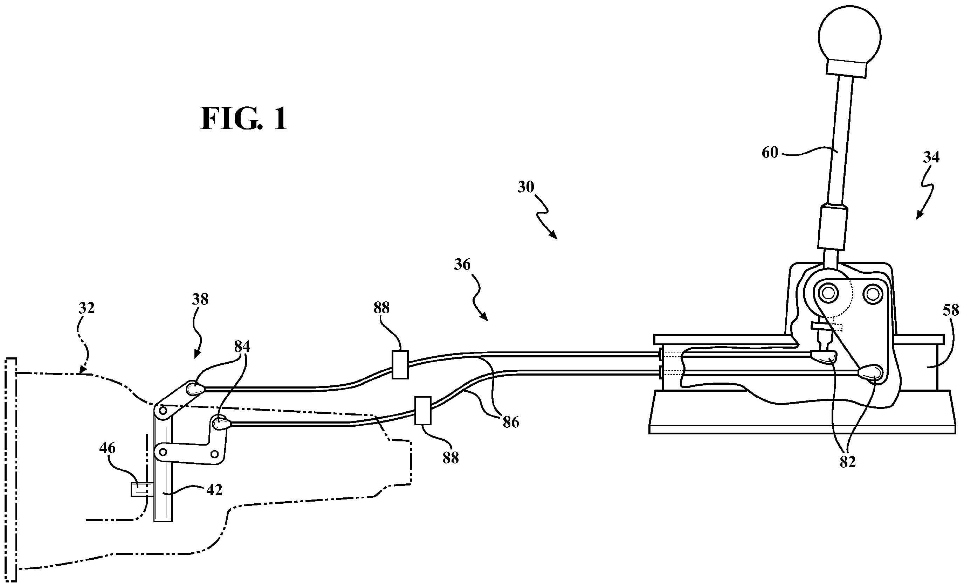

Referring to the Figures wherein like numerals indicate like or corresponding parts throughout the several views, a gear set selection system 30 for a vehicle (not shown) is generally shown in Figure 1. The gear set selection system 30 includes a transmission assembly 32 having a first gear set and a second gear set spaced from each other as is known in the art. Additionally, the gear set selection system 30 includes a shifter assembly 34 in communication with the transmission assembly 32. Further, the gear set selection system 30 includes a motion transmitting device 36 coupled to the shifter assembly 34 and the transmission assembly 32 for transferring movement of the shifter assembly 34 to the transmission assembly 32 to select between the first and second gear sets. It is to be appreciated that the transmission assembly 32 shown in Figure 1 is schematic and may be any suitable type of transmission assembly, such as, but not limited to a manual transmission or an automatic transmission.

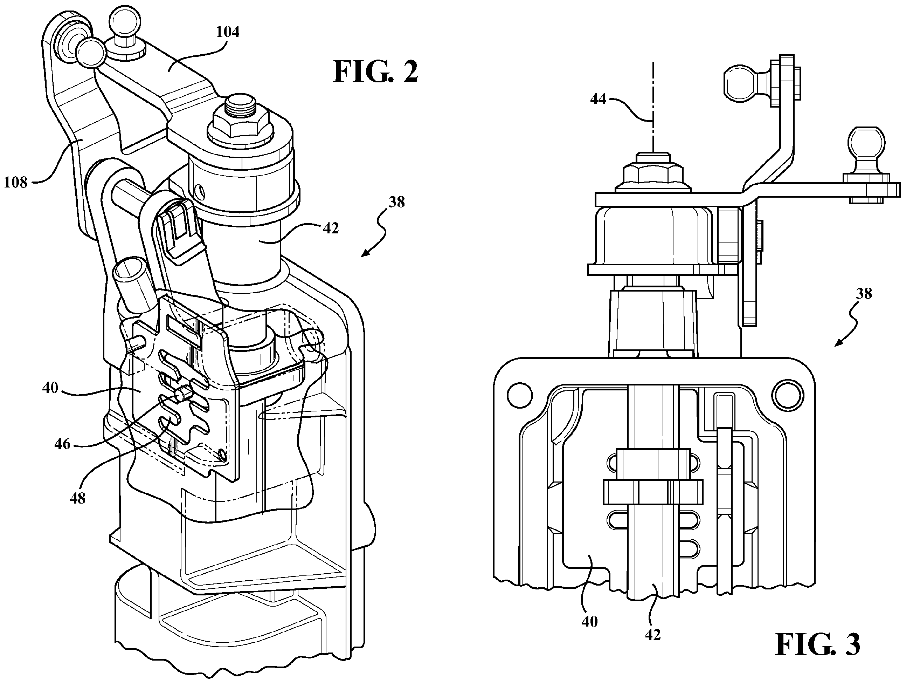

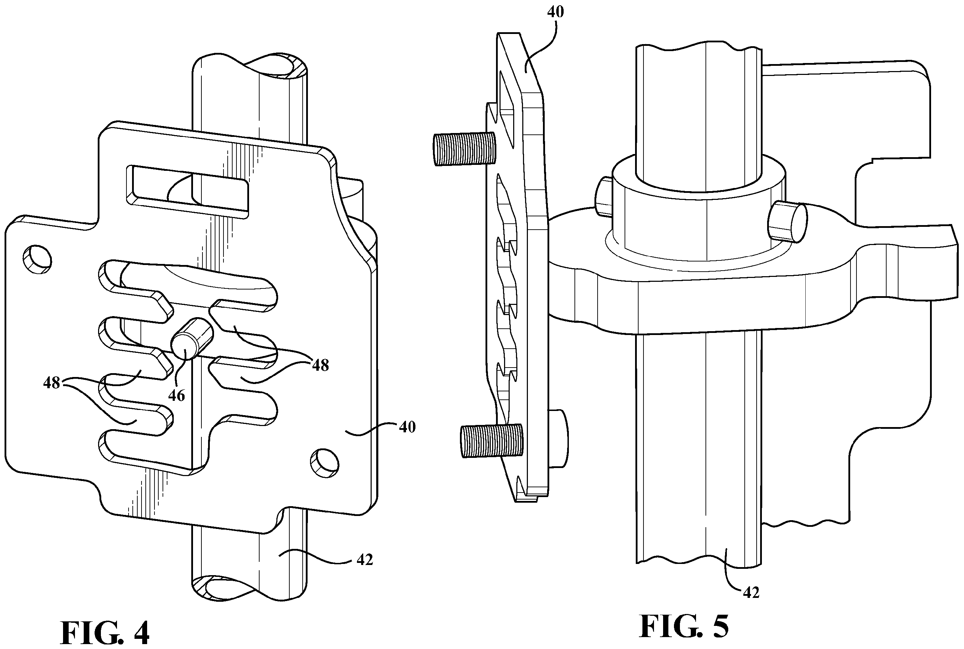

As also shown in Figures 2-4, the transmission assembly 32 includes a transmission actuator 38. The actuator 38 responds to movements of the shifter assembly 34 to move one or more shift forks to in turn actuate a clutch of an engine as known to those skilled in the art. The transmission actuator 38 of the transmission assembly 32 includes a transmission plate 40. The transmission plate 40 can have a substantially planar cross-sectional configuration, such as shown, or can have any suitable arcuate configuration as desired. The transmission actuator 38 of the transmission assembly 32 also includes a shaft 42 defining a shaft axis 44 positioned relative to the transmission plate 40. The shaft 42 is movable along the shaft axis 44 and rotatable about the shaft axis 44. The transmission actuator 38 of the transmission assembly 32 further includes a selector 46 movably disposed in the transmission plate 40 as will be discussed in greater detail below. The selector 46 is specifically coupled to the shaft 42 and extends away from the shaft 42 transverse to the shaft axis 44 into the transmission plate 40. As shown, the selector 46 has a cylindrical configuration, but it is to be appreciated that the selector 46 may have any suitable alternative configuration as known to those skilled in the art. The selector 46 is movable along the shaft axis 44 as the shaft 42 moves along the shaft axis 44. The selector 46 pivots about the shaft axis 44 as the shaft 42 rotates about the shaft axis 44.

Referring specifically to Figures 2, 4 and 6-7, the transmission plate 40 has a protrusion 48. As discussed in greater detail below, the transmission plate 40 preferably has a plurality of protrusions 48. The transmission plate 40 also defines a plurality of paths 50 flanking each of the plurality of protrusions 48. Specifically, the transmission plate 40 includes five protrusions 48 and defines seven paths 50. For illustrative purposes, the paths 50 will be further discussed as a first path 50A and a second path 50B. It should be appreciated that a second path 50B for one protrusion 48 may also be a first path 50A for another protrusion 48, and vise-versa. Said differently, a path 50 may be both a first path 50A and a second path 50B for different protrusions 48. It is also to be appreciated that the transmission plate 40 may include any suitable number of protrusions 48 and define any suitable number of first 50A and second 50B paths based on the desired gear sets of the transmission assembly 32. In other words, the transmission plate 40 preferably has a number of paths 50 associated with a corresponding number of gear sets of the transmission assembly 32.

Turning now to an illustrative example, the transmission plate 40 defines a first path 50A associated with the first gear set. Further, the transmission plate 40 defines a second path 50B associated with the second gear set with the second path 50B being separated from the first path 50A by the protrusion 48. As eluded to above, the transmission plate 40 defines a plurality of the first 50A and second 50B paths flanking each of the plurality of protrusions 48. Specifically, any one of the seven paths 50 could be the first path 50A or the second path 50B depending on the particular shifting operation.

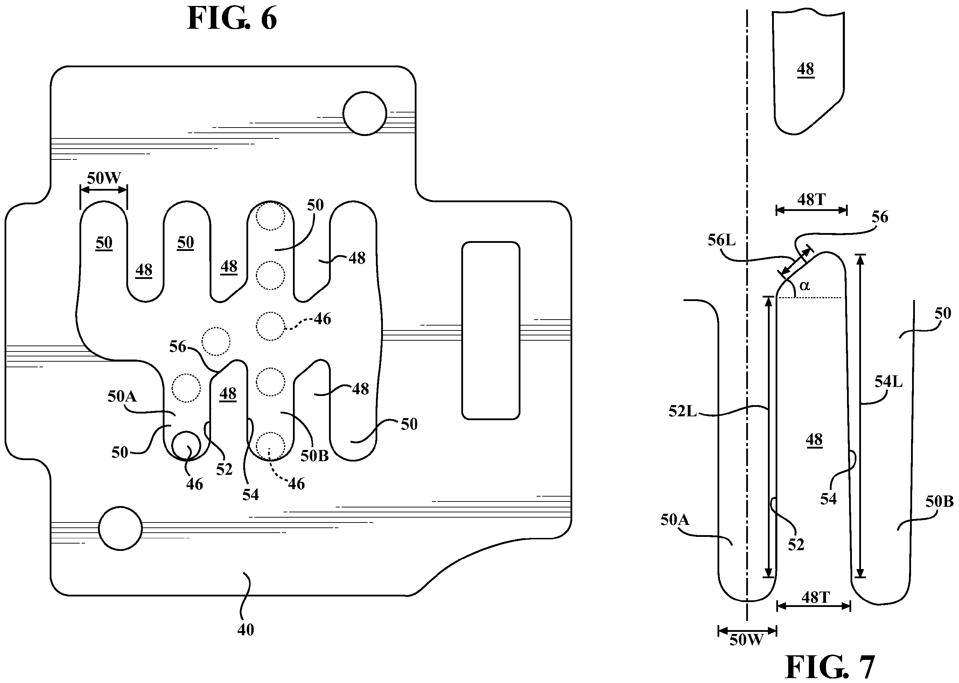

Continuing with the illustrative example, the protrusion 48 defines a first wall 52 facing the first path 50A with the first wall 52 partially defining the first path 50A. As shown in Figure 7, the first wall 52 has a first protrusion length of travel 52L. The first protrusion length of travel 52L of the first wall 52 extends along the first path 50A and is the length of travel that the selector 46 would travel when moving into a nominal and/or over-travel position within the first path 50A. The protrusion 48 defines a second wall 54 facing the second path 50B with the second wall 54 partially defining the second path 50B. The second wall 54 is spaced from the first wall 52 and is generally parallel with the first wall 52. The second wall 54 similarly defines a second protrusion length of travel 54L. The second protrusion length of travel 54L extends along the second path 50B and is the length of travel that the selector 46 would travel when moving into a nominal and/or over-travel position within the second path 50B. The protrusion 48 also defines a third wall 56 interconnecting the first 52 and second 54 walls. The third wall 56 extends transverse to the first 52 and second 54 walls, but not necessarily perpendicular to the first 52 and second 54 walls. Preferably, the third wall 56 extends at an angle to the first 52 and second 54 walls. The third wall 56 has a third protrusion length of travel 56L. In the illustrated embodiment, the first 52, second 54 and third 56 walls do not necessarily directly connect to each other. Preferably, the protrusion 48 defines a transition section between the walls with the transition section being preferably curved. The arc of the curvature is configured in any suitable manner. It is to be appreciated that the protrusion 48 may include any suitable number of walls or transition sections and the transition sections may be of any suitable configuration.

The third wall 56 specifically extends from the first wall 52 at a protrusion angle α. The protrusion angle α is any suitable value such that the third wall 56 extends from the first path 50A toward the second path 50B. In the embodiment illustrated the protrusion angle α would be an acute angle. The protrusion 48 has a protrusion thickness 48T defined between the first wall 52 and the second wall 54. In other words, the protrusion thickness 48T is a distance between the first 52 and second 54 walls. In some versions of the invention, such as the illustrated version, the overall length of the protrusion 48 is greater than the first protrusion length of travel 52L of the first wall 52.

The selector 46 is movably disposed in the transmission plate 40 between the first 50A and second 50B paths about the protrusion 48 for switching between the first and second gear sets. Specifically, the selector 46 extends transverse to the shaft axis 44 into the desired path 50. The selector 46 is movable from the first path 50A along the first wall 52 to the third wall 56. The selector 46 is then movable along the third wall 56 to the second wall 54 and along the second wall 54 into the second path 50B.

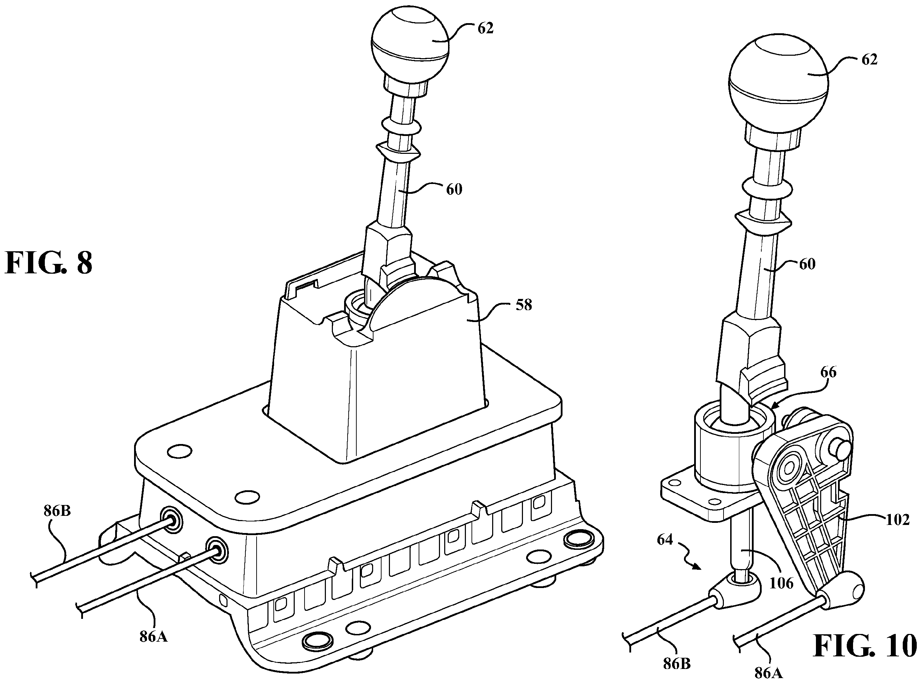

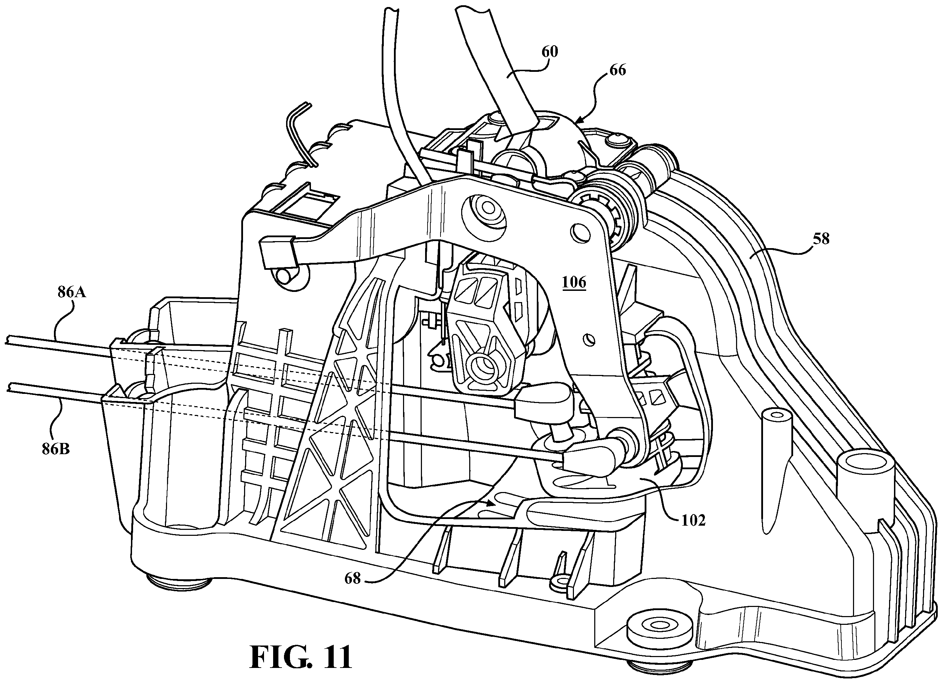

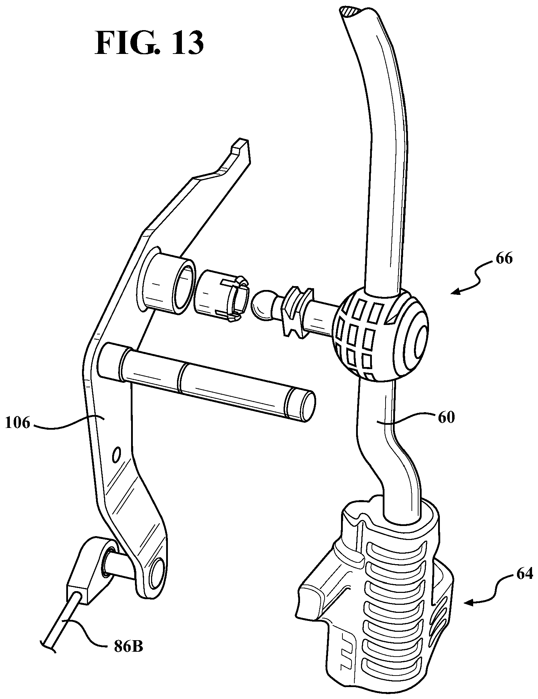

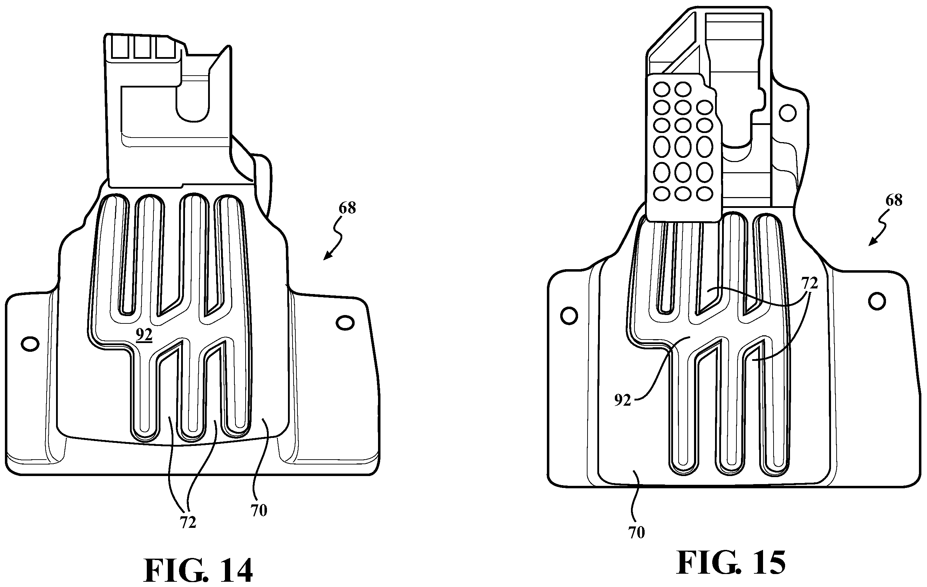

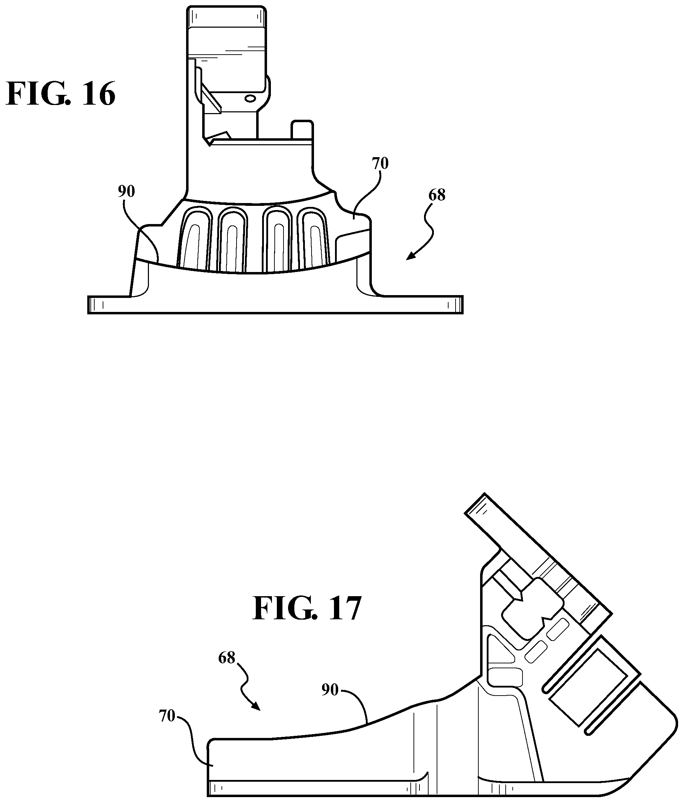

Turning to Figures 8-10, as well as Figures 11-19, the gear set selection system 30 further includes the shifter assembly 34 having a housing 58. One version of a shifter assembly 34 is shown in Figures 8-10 and another version is shown in Figures 11-19. It should be appreciated that any other suitable version or configuration of a shifter assembly 34 could be used and the two versions shown are for illustrative purposes. Common features of the two versions of the shifter assemblies 34 will be discussed in unison, while other features will be addressed independently.

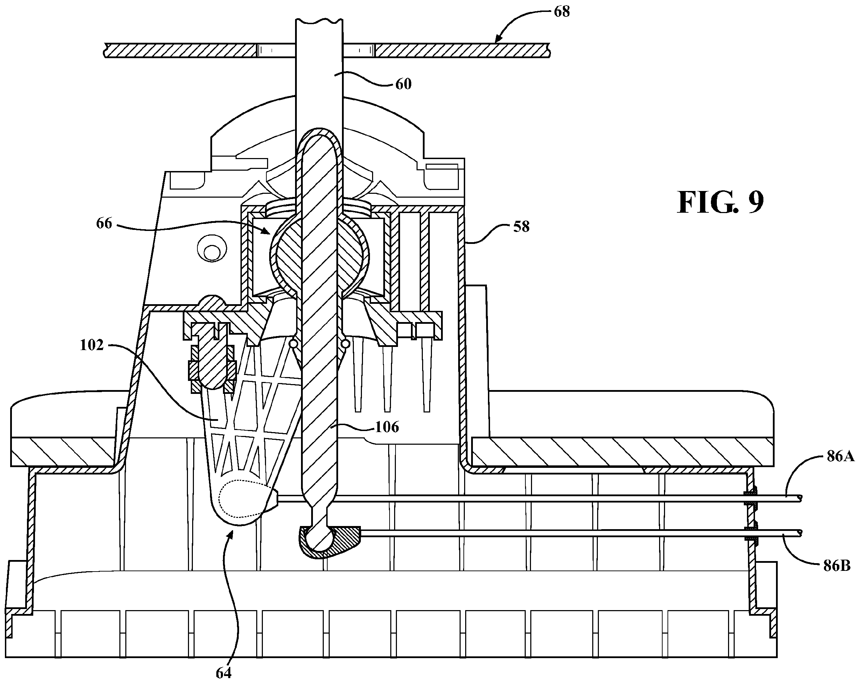

Referring specifically to Figures 9 and 11, each housing 58 defines a housing chamber. It is to be appreciated that the chamber may have any suitable configuration, and, as mentioned above, may include a number of other components or features not shown or described herein.

Each shifter assembly 34 includes a shift lever 60 coupled to the housing 58. Specifically, the shift lever 60 is movably coupled to the housing 58 for selecting any one of the gear sets, such as one of the first and second gear sets. The shift lever 60 has a first end 62 and a second end 64 spaced from each other. As shown, the first end 62 is configured to be grasped by an operator and moved relative to the housing 58. The second end 64 is disposed at least partially in the housing chamber.

The shifter assembly 34 includes a rotational mechanism 66 coupled to the housing 58 and the shift lever 60 between the first 62 and second 64 ends to support the shift lever 60 on the housing 58. The rotational mechanism 66 can have a spherical configuration and be movably disposed at least partially in the chamber. It is to be appreciated that the rotational mechanism 66 may have any suitable configuration know to those skilled in the art.

The shifter assembly 34 includes a guide 68 coupled to the housing 58 spaced either above or below the rotational mechanism 66. It is to be appreciated that the guide 68 may be integrally incorporated into the housing 58 of the shifter assembly 34 or may be coupled and/or mounted to the housing 58 as a separate component. As shown schematically in Figure 9, the guide 68 is disposed above the rotational mechanism 66, and may be disposed above a majority of the housing 58. In this configuration, the shift lever 60 passes through the guide 68. As best shown in Figures 11-12, the guide 68 can be disposed below the rotational mechanism 66 and can also be formed as a part of the housing 58. Preferably, the guide 68 is integrally formed in a base 70 of the housing 58. In this configuration, the shift lever 60 can either pass through the guide 68 or (such as shown) engage tracks within the guide 68. In either orientation, the guide 68 would have similar characteristics and configurations. As such, the subsequent discussion of the particulars of the guide 68 are equally applicable to all versions, configurations and orientations of the guide 68.

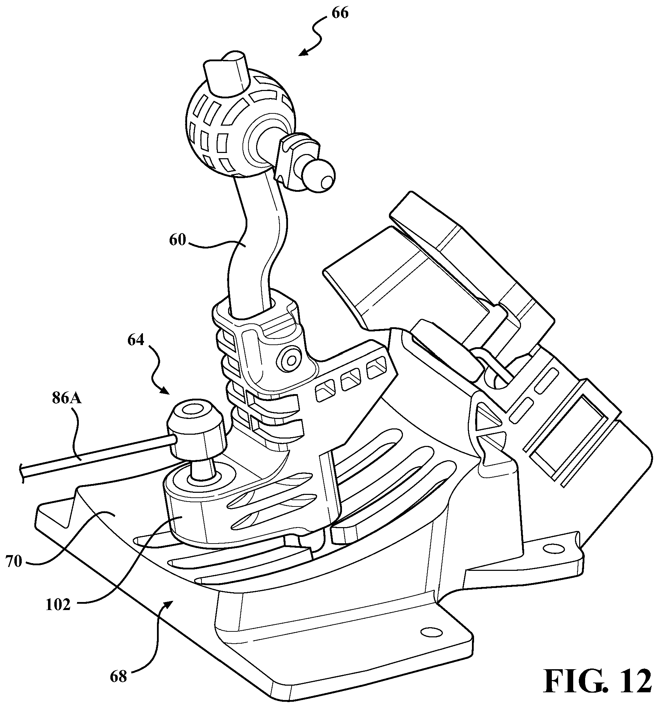

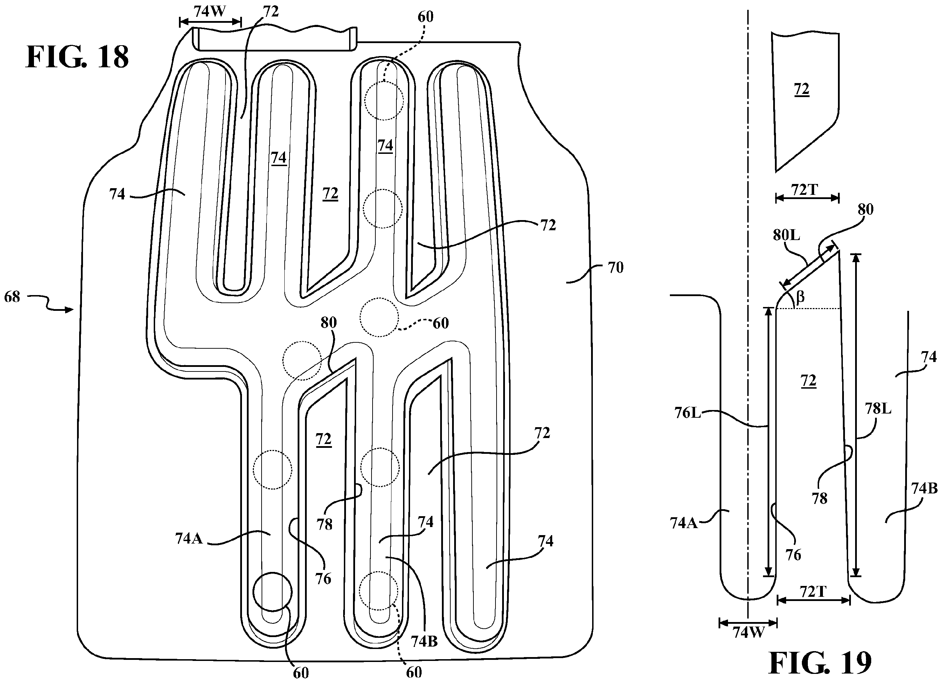

As shown in Figures 12 and 14-19, with a particular focus on Figures 18-19, the guide 68 has a projection 72. As discussed in greater detail below and as similar to the transmission plate 40, the guide 68 preferably has a plurality of projections 72. The guide 68 also defines a plurality of tracks 74 flanking each of the plurality of projections 72. Specifically, the guide 68 includes five projections 72 and defines seven tracks 74. Each of the projections 72 of the guide 68 corresponds to a protrusion 48 of the transmission plate 40. Similarly, each of the tracks 74 of the guide 68 correspond to a path 50 of the transmission plate 40. In a similar manner as the transmission plate 40, the tracks 74 of the guide 68 will be further discussed as a first track 74A and a second track 74B. It is to be appreciated that a second track 74B for one projection 72 may also be a first track 74A for another projection 72, and vise-versa. Said differently, a track 74 may be both a first track 74A and a second track 74B for different projections 72. It is also to be appreciated that the guide 68 may include any suitable number of projections 72 and define any suitable number of first 74A and second 74B tracks based on the desired gear sets of the transmission assembly 32. In other words, the guide 68 has a number of tracks 74 associated with a corresponding number of gear sets of the transmission assembly 32. Further, each one of the tracks 74 is associated with a corresponding one of the paths 50.

Turning now to an illustrative example, the guide 68 defines a first track 74A associated with the first path 50A. Further, the guide 68 defines a second track 74B associated with the second path 50B with the second track 74B being separated from the first track 74A by the projection 72. As eluded to above, the guide 68 defines a plurality of the first 74A and second 74B tracks flanking each of the plurality of projections 72. Specifically, any one of the seven tracks 74 could be the first track 74A or the second track 74B depending on the particular shifting operation.

Continuing with the illustrative example, the projection 72 defines a first side 76 facing the first track 74A with the first side 76 partially defining the first track 74A. As shown in Figure 19, the first side 76 has a first projection length of travel 76L and the first track 74A is adjacent to the projection 72. The first projection length of travel 76L is the length of travel that the shift lever 60 would travel when moving into a nominal and/or over-travel position within the first track 74A. The projection 72 defines a second side 78 facing the second track 74B with the second side 78 partially defining the second track 74B. The second side 78 is spaced from the first side 76 and is generally parallel with the first side 76. The second side 78 similarly defines a second projection length of travel 78L. The second projection length of travel 78L extends along the second track 74B and is the length of travel that the shift lever 60 would travel when moving into a nominal and/or over-travel position within the second track 74B. It should be appreciated that the first 74A and second 74B tracks may be elongated beyond the first 76L and second 78L projection lengths of travel without deviating from the scope of the invention. In other words, the location of an end stop of the first 74A and second 74B tracks may be different than illustrated in Figure 19 without deviating from the scope of the invention.

The projection 72 also defines a third side 80 interconnecting the first 76 and second 78 sides. The third side 80 extends transverse to the first 76 and second 78 sides, but not necessarily perpendicular to the first 76 and second 78 sides. Preferably, the third side 80 extends at an angle to the first 76 and second 78 sides. The third side 80 has a third projection length of travel 80L. As discussed above relative to the protrusion 48, the first 76, second 78 and third 80 sides do not necessarily directly connect to each other. In the preferred illustrated embodiment, the projection 72 defines a transition section between the first 76 and third 80 sides with the transition section being curved. The second 78 and third 80 sides preferably connect to each other at a relatively sharp angle, as compared to the curvature of the transition section. It is to be appreciated that the projection 72 may include any suitable number of sides or transition sections and the transition sections may be of any suitable configuration.

The third side 80 specifically extends from the first side 76 at a projection angle β. The projection angle β is any suitable value, but is preferably an acute angle as shown in the illustrative embodiment. The projection 72 also has a projection thickness 72T defined between the first side 76 and the second side 78.

During operation, the shift lever 60 is movably disposed in the guide 68 between the first 74A and second 74B tracks about the projection 72. Specifically, the shift lever 60 is disposed in one of the tracks 74, such as the first 74A and second 74B tracks, and is movable to the other of the first 74A and second 74B tracks about the projection 72 when the user desires to switch between the first and second gear sets.

The motion transmitting device 36 has a first terminal end 82 and a second terminal end 84 spaced from each other with the first terminal end 82 coupled to the shift lever 60 and the second terminal end 84 coupled to the selector 46 for transferring movement of the shift lever 60 to the selector 46 and elastically deforming to prevent noise. Said differently, the motion transmitting device 36 transfers movement of the shift lever 60 such that the selector 46 moves in the same pattern as the shift lever 60. The motion transmitting device 36 can include a single or a plurality of cables 86 as desired. The motion transmitting device 36 can also include at least one dampener 88 positioned between the first 82 and second 84 terminal ends of either one or all of the cables 86 with the dampener 88 elastically deforming during movement of the shift lever 60. The dampeners 88 elastically deform to account for tolerances in the shift lever 60, motion transmitting device 36, transmission assembly 32, and any other interconnected components. Additionally, the dampeners 88 elastically deform to absorb vibrations or noise created by the shift lever 60, motion transmitting device 36, transmission assembly 32, and any other interconnected components. It is to be appreciated that the motion transmitting device 36 may include any suitable number of dampeners 88.

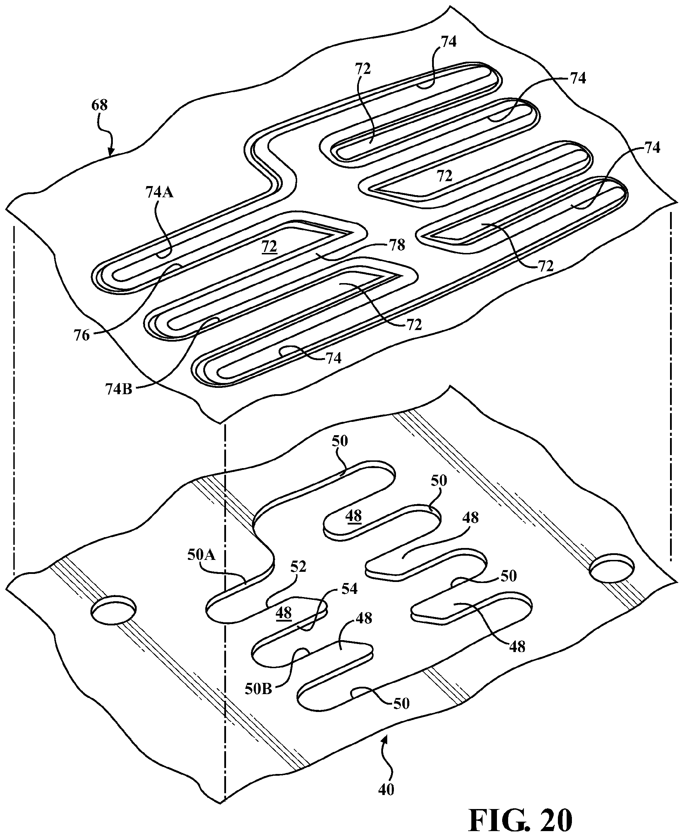

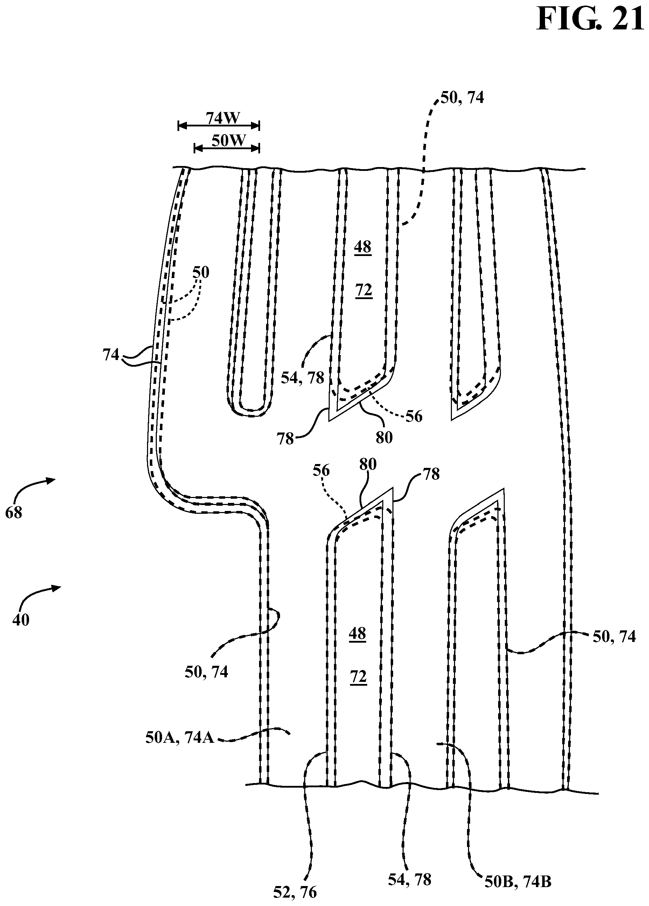

Turning to Figures 20 and 21, these figures schematically represent the relative overlay of the guide 68 and the transmission plate 40. Figure 20 illustrates these components relatively flat and disposed on top of each other. It is to be appreciated that the configuration of these components has been made schematic to help illustrate the differences in the relative lengths, angles and orientations of the projections 72, protrusions 48, tracks 74 and paths 50. Figure 21 is fragmented schematic plan view of the guide 68 overlaid on top of the transmission plate 40 to further illustrate the specific differences in the relative lengths of travel, angles and orientations of the projections 72, protrusions 48, tracks 74 and paths 50. It is to be appreciated that the guide 68 and transmission plate 40 are not necessarily drawn to scale in Figure 21 and may have been proportionally enlarged for illustrative purposes. The dashed lines in Figure 21 represent a schematic view of the transmission plate 40. The solid lines in Figure 21 represent a schematic view of the guide 68. When the lines of the guide 68 overlap the lines of the transmission plate 40, it is schematically shown as dashed-solid-dashed lines.

Referring specifically to Figure 21, the first projection length of travel 76L of the first side 76 and the first protrusion length of travel 52L of the first wall 52 define a first ratio relative to each other. As illustrated, the first projection length of travel 76L and the first protrusion length of travel 52L proportionally track each other and are therefore shown as dashed-solid-dashed lines through their entire length of travel. As such, the entire first ratio is illustrated by the overlap of the solid lines with the dashed lines, which, again, is shown as the dashed-solid-dashed lines.

Continuing with Figure 21, the second projection length of travel 78L of the second side 78 and the second protrusion length of travel 54L of the second wall 54 define a second ratio relative to each other. As illustrated, the second projection length of travel 78L and the second protrusion length of travel 54L proportionally track each other for only a portion of their length of travel. As such, the solid lines, in certain defined areas, extend outward from the dashed lines to illustrate that there is at least a portion of their relative lengths that is disproportional. The disproportional areas define the second ratio. The second ratio may be found in multiple locations with each location potentially having a different second ratio. In other words, there may be a plurality of second ratios with each second ratio defined by a disproportional deviation of one of the sides 76, 78, 80 relative to one of the walls 52, 54, 56. Each of the second ratios is illustrated by a separation of the solid lines from the dashed line.

In a particular contemplated embodiment, the first projection length of travel 76L of the first side 76 is 32.23 millimeters (mm) and the first protrusion length of travel 52L of the first wall 52 is 5.11 mm to define a first ratio of 6.31. Continuing with this particular contemplated embodiment, the second projection length of travel 78L of the second side 78 is 39.99 mm and the second protrusion length of travel 54L of the second wall 54 is 6.45 mm to define a second ratio of 6.2.

As mentioned above, the first ratio is disproportional to the second ratio such that movement of the shift lever 60 from the first track 74A to the second track 74B about the projection 72 is altered in comparison to movement of the selector 46 from the first path 50A to the second path 50B about the protrusion 48 to overcome elastic deformation of the motion transmitting device 36 to ensure the selector 46 is disposed in the second path 50B when the shift lever 60 is disposed in the second track 74B. Specifically, the first ratio is greater than the second ratio such that movement of the shift lever 60 between the first 74A and second 74B tracks about the projection 72 is greater than the corresponding movement of the selector 46 between the first 50A and second 50B paths. The disproportion between the ratios is created by the interrelationship between a number of different lengths, angles and orientations as discussed above and discussed in greater detail below.

In addition, a third projection length of travel 80L of the third side 80 is 7.87 mm and a third protrusion length of travel 56L of the third wall 56 is 2.09 mm to define a second ratio of 3.77. The third side 80 extends from the first side 76 at a projection angle β and the third wall 56 extends from the first wall 52 at a protrusion angle α. The projection β and protrusion α angles each have a value such that the third side 80 or wall 56 extends toward the second side 78 or wall 54, respectively. As shown specifically in Figure 21, the projection angle β is greater than the protrusion angle α. As such, the third wall 56 (illustrated by dashed lines) and third side 80 (illustrated by solid lines) extend along disproportional planes although, relatively speaking, the first wall 52 extends along a proportional plane as the first side 76 and at least a portion of the second wall 54 extends along the same proportional plane as at least a portion of the second side 78. As discussed above, there may be multiple second ratios and this is one example of a different second ratio.

As also shown in Figure 21, one of the tracks 74 has a track width 74W. Similarly, one of the paths 50 has a path width 50W with the track width 74W being greater than the path width 50W to define an additional second ratio. This is illustrated in a similar manner with the track width 74W shown in solid lines and the path width 50W shown in dashed lines.

As also shown in Figure 21, the second projection length of travel 78L is proportionally greater than the second protrusion length of travel 54L. Additionally, the third projection length of travel 80L is proportionally greater than the third protrusion length of travel 56L.

In the embodiment shown in Figures 12-17, the guide 68 has an arcuate cross-sectional configuration along the tracks 74 and the second end 64 of the shift lever 60 moves along the first 74A and second 74B tracks in an arcuate pattern as the shift lever 60 is moved. Specifically, shift lever 60 defines a pivot radius between the rotational mechanism 66 and the second end 64 of the shift lever 60. The guide 68 defines a guide radius creating the arcuate cross-sectional configuration. The guide radius is greater than the pivot radius such that the second end 64 of the shift lever 60 remains in the first 74A and second 74B tracks as the shift lever 60 pivots about the rotational mechanism 66. It is to be appreciated that the guide 68 may have any suitable alternative configuration.

As shown in Figures 12 and 16-17, the projection 72 has a top surface 90 and the guide 68 has a bottom surface 92 partially defining the first 74A and second 74B tracks with the first 74A and second 74B tracks having a depth defined between the top surface 90 and the bottom surface 92. In some embodiments, the shift lever 60 is disposed in the first 74A and second 74B tracks between the top 90 and bottom 92 surfaces.

In the embodiment shown in Figures 12-17, each of the first 74A and second 74B tracks have a depth and the second end 64 of the shift lever 60 has a hemispherical configuration defining a radius. The depth of the first 74A and second 74B tracks is greater than the radius of the second end 64 such that the second end 64 remains in the first 74A and second 74B tracks as the shift lever 60 is moved from the first track 74A to the second track 74B about the projection 72. Said differently, the second end 64 cannot "walk-out" of the first 74A and second 74B tracks as the shift lever 60 is moved. It is to be appreciated that the second end 64 may have any suitable alternative configuration.

In some embodiments, such as shown in Figures 11-12, the shifter assembly 34 includes a plunger 94 disposed in the shift lever 60 biased to extend from the second end 64 to abut the guide 68 to maintain continuous contact between the shift lever 60 and the guide 68 as the shift lever 60 moves between the first 74A and second 74B tracks about the projection 72. Specifically, the plunger 94 is biased to maintain continuous contact with the bottom surface 92. Additionally, the biasing of the plunger 94 retains the plunger 94 in the first 74A and second 74B tracks as the shift lever 60 is moved between the first 74A and second 74B tracks about the projection 72.

As mentioned above, the plunger 94 can also have a plunger end 96 with a hemispherical configuration defining a radius. The depth of the first 74A and second 74B tracks is greater than the radius of the plunger end 96 such that the plunger end 96 remains in the first 74A and second 74B tracks as the shift lever 60 moves between the first track 74A and the second track 74B about the projection 72. It is to be appreciated that the plunger end 96 may have any suitable alternative configuration.

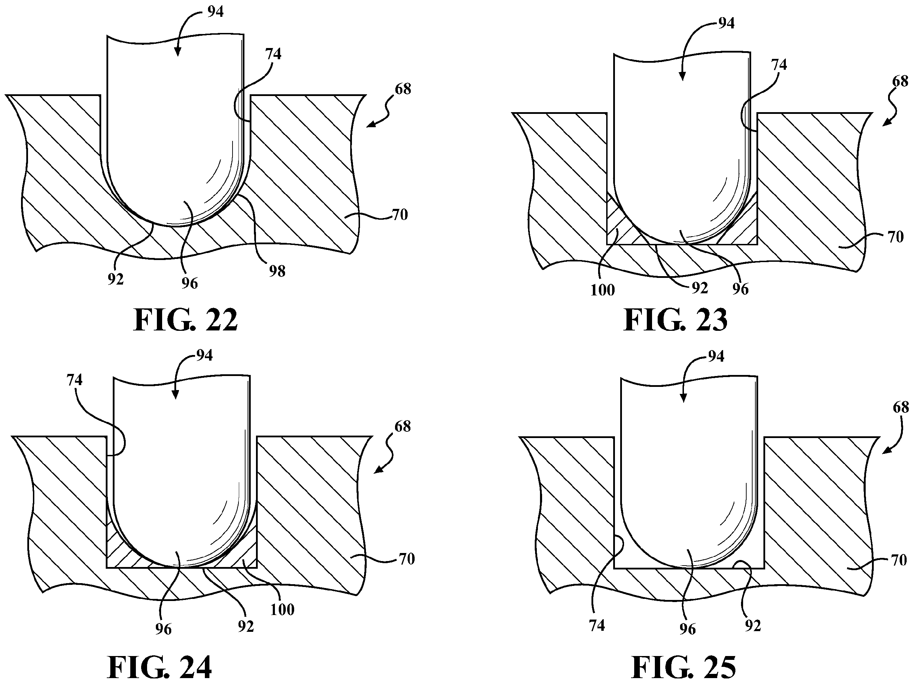

In the embodiment shown in Figure 22, the guide 68 has a bottom surface 92 with an intersection of the bottom surface 92 and at least one of the sides 76, 78, 80 having an arcuate cross-sectional configuration. As also shown in Figure 22, the intersection of the bottom surface 92 and the sides 76, 78, 80 have a chamfer 98 defining the arcuate cross-sectional configuration. As shown in Figures 23 and 24, the intersection of the bottom surface 92 and the sides 76, 78, 80 has a fillet 100. In Figure 23 the fillet 100 has an angular cross-sectional configuration and in Figure 24 the fillet 100 has an arcuate cross-sectional configuration. As shown in Figure 25, the bottom surface 92 of the guide 68 can be perpendicular to and intersecting with the sides 76, 78, 80.

Turning back to Figures 1-2 and 8-13, the shift lever 60 can move in at least two different directions. In particular, the motion transmitting device 36 can include a first cable 86A coupled to the shift lever 60 and the selector 46 to transfer movement of the shift lever 60 when moving in a first direction to corresponding movement of the selector 46. Specifically, the shift lever 60 has a first arm 102 and the transmission assembly 32 includes a first bracket 104 coupled to the shaft 42. The first cable 86A is coupled to the first arm 102 and first bracket 104 for transferring movement of the shift lever 60 in the first direction to the selector 46. It is to be appreciated that the first direction may be in any suitable orientation, such as transverse to the first 74A and second 74B tracks.

The motion transmitting device 36 can also include a second cable 86B coupled to the shift lever 60 and the selector 46 to transfer movement of the shift lever 60 when moving in a second direction to corresponding movement of the selector 46. Specifically, the shift lever 60 has a second arm 106 and the transmission assembly 32 includes a second bracket 108 coupled to the shaft 42. The second cable 86B is coupled to the second arm 106 and second bracket 108 for transferring movement of the shift lever 60 in the second direction to the selector 46.

The first cable 86A can include at least one dampener 88 between the first arm 102 and the first bracket 104. Similarly, the second cable 86B includes at least one dampener 88 between the second arm 106 and the second bracket 108.

As an illustrative example of one operation, the shift lever 60 will be initially disposed in the first track 74A of the guide 68, which in turn places the selector 46 in the first path 50A of the transmission plate 40 and correspondingly places the transmission assembly 32 within the first gear set. It should be noted that identifying a first gear set does not necessarily mean a first gear of a manual transmission. The first gear set is the initial (first) position of the shift lever 60 prior to moving the shift lever 60 to a subsequent position.

The operator can then grasp and move the shift lever 60 in the first direction to move the shift lever 60 along the first track 74A and first side 76 toward the third side 80. The first cable 86A of the motion transmitting device 36 transfers movement of the shift lever 60 in the first direction to the selector 46. The selector 46 correspondingly moves along the first path 50A and first wall 52 toward the third wall 56.

Once the shift lever 60 reaches the third side 80, the shift lever 60 begins to move in the second direction to move the shift lever 60 along the third side 80 toward the second track 74B and second side 78. The first cable 86A of the motion transmitting device 36 continues to transfer this movement of the shift lever 60 to the selector 46. Simultaneously, the second cable 86B of the motion transmitting device 36 transfers the movement of the shift lever 60 in the second direction to the selector 46. The selector 46 also moves along the third wall 56 towards the second path 50B and second wall 54. The slope of the projection angle β and the third projection length of travel 80L of the third side 80 of the guide 68 is at a different ratio than the slope of the protrusion angle α and third protrusion length of travel 56L of the third wall 56 of the transmission plate 40. As such, any slack or free play within the cable or cables 86 is accounted for, which ensures that the shift lever 60 moves the appropriate amount of travel in order to have the selector 46 correctly move in the desired path 50.

Once the shift lever 60 has reached the second side 78, the shift lever 60 moves in the first direction to move the shift lever 60 along the second side 78 into the second track 74B. The first cable 86A of the motion transmitting device 36 transfers the movement of the shift lever 60 in the first direction to the selector 46. The selector 46 correspondingly moves along the second wall 54 into the second path 50B to change the transmission assembly 32 to operate within the second gear set associated with the second path 50B. Again, the second gear set does not necessarily equate to the second gear of the transmission. The second gear set is any gear that is different from the first gear set. Similar movements and dynamics will occur when moving between any of the desired tracks 74 and paths 50.

The invention, which is defined by the appended claims, has been described in an illustrative manner, and it is to be understood that the terminology which has been used is intended to be in the nature of words of description rather than of limitation. As is now apparent to those skilled in the art, many modifications and variations of the present invention are possible in light of the appended claims. It is, therefore, to be understood that within the scope of the appended claims, wherein reference numerals are merely for convenience and are not to be in any way limiting, the invention may be practiced otherwise than as specifically described.

## Claims

1. A gear set selection system (30) for a vehicle comprising:
a transmission assembly (32) having;
a first gear set and a second gear set spaced from each other,
a transmission plate (40) having a protrusion (48) and a first path (50A) associated with said first gear set and a second path (50B) associated with said second gear set with said second path (50B) separated from said first path (50A) by said protrusion (48), and said protrusion (48) defining a first wall (52) facing said first path (50A) and a second wall (54) facing said second path (50B) with a third wall (56) interconnecting said first and second walls (52, 54), and
a selector (46) disposed in said transmission plate (40) and moveable between said first and second paths (50A, 50B) about said protrusion (48) for switching between said first and second gear sets; and
a shifter assembly (34) having;
a housing (58),
a shift lever (60) coupled to said housing (58) and having a first end (62) and a second end (64) spaced from each other,
a rotational mechanism (66) coupled to said housing (58) and said shift lever (60) between said ends (62, 64) to support said shift lever on said housing (58),
a guide (68) coupled to said housing (58) spaced from said rotational mechanism (66), said guide (68) having a projection (72) and a first track (74A) associated with said first path (50A) and a second track (74B) associated with said second path (50B), with said second track (74B) separated from said first track (74A) by said projection (72), and said projection (72) defining a first side (76) facing said first track (74A) and a second side (78) facing said second track (74B), with a third side (80) interconnecting said first and second sides (76, 78), and
said shift lever (60) disposed in said guide (68) and moveable between said first and second tracks ((74A, 74B) about said projection (72) to facilitate said movement of said selector (46) between said first and second paths (50A, 50B); and
a motion transmitting device (36) having a first terminal end (82) and a second terminal end (84) spaced from each other with said first terminal end (82) coupled to said shift lever (60) and said second terminal end (84) coupled to said selector (46) to transfer movement of said shift lever (60) to said selector (46) for switching between said first and second gear sets; and
wherein a first projection length of travel (76L) of said first side (76) and a first protrusion length of travel (52L) of said first wall (52) define a first ratio relative to each other; and
wherein a second projection length of travel (78L) of said second side (78) and a second protrusion length of travel (54L) of said second wall (54) define a second ratio relative to each other;
**characterized in that** said first ratio is disproportional to said second ratio such that movement of said shift lever (60) from said first track (74A) to said second track (74B) about said projection (72) is altered in comparison to movement of said selector (46) from said first path (50A) to said second path (50B) about said protrusion (48) to overcome elastic deformation of said motion transmitting device (36) to ensure said selector (46) is disposed in said second path (50B) when said shift lever (60) is disposed in said second track (74B).

2. A gear set selection system as set forth in any of the preceding claims wherein said first ratio is greater than said second ratio such that the movement length of said shift lever (60) between said first and second tracks (74A, 74B) about said projection (72) is greater than the corresponding movement length of said selector (46) between said first and second paths (50A, 50B).

3. A gear set selection system as set forth in any of the preceding claims wherein said third side (80) extends from said first side (76) at a projection angle (β) and said third wall (56) extends from said first wall (52) at a protrusion angle (α) with said projection angle (β) being greater than said protrusion angle (α).

4. A gear set selection system as set forth in any of the preceding claims wherein one of said tracks (74) has a track width (74W) and one of said paths (50) has a path width (50W), with said track width (74W) being greater than said path width (50W) to define an additional second ratio.

5. A gear set selection system as set forth in any of the preceding claims wherein said second side (78) has a second projection length of travel (78L) and said second wall (54) has a second protrusion length of travel (54L) with said second projection length of travel (78L) being greater than said second protrusion length of travel (54L).

6. A gear set selection system as set forth in any of the preceding claims wherein said third side (80) has a third projection length of travel (80L) and said third wall (56) has a third protrusion length of travel (56L), with said third projection length of travel (80L) being greater than said third protrusion length of travel (56L).

7. A gear set selection system as set forth in any of the preceding claims wherein said guide (68) includes a plurality of projections (72) and defines a plurality of tracks (74) flanking each of said plurality of projections (72) and said transmission plate (40) includes a plurality of protrusions (48) and defines a plurality of paths (50) flanking each of said plurality of protrusions (48), with each one of said tracks (50) being associated with a corresponding one of said paths (50).

8. A gear set selection system as set forth in any of the preceding claims wherein each of said first and second tracks (74A, 74B) have a depth and said second end (64) of said shift lever (60) has a hemispherical configuration defining a radius, said depth of said first and second tracks (74A, 74B) is greater than said radius of said second end (64) such that said second end (64) remains in said first and second tracks (74A, 74B) as said shift lever (60) is moved from said first track (74A) to said second track (74B) about said projection (72).

9. A gear set selection system as set forth in any of the preceding claims wherein said guide (68) has an arcuate cross-sectional configuration along said tracks (74).

10. A gear set selection system as set forth in any of the preceding claims, wherein said guide (68) has an arcuate cross-sectional configuration and said second end (64) of said shift lever (60) moves along said first and second tracks (74A, 74B) in an arcuate pattern during said movement of said shift lever (60).

11. A gear set selection system as set forth in any of the preceding claims, wherein said guide (68) has a bottom surface (92) with an intersection of said bottom surface (92) and at least one of said sides (76, 78, 80) having a chamfer (98).

12. A gear set selection system as set forth in any of the preceding claims, wherein said guide (68) has a bottom surface (92) with an intersection of said bottom surface (92) and at least one of said sides (76, 78, 80) having a fillet 8100) with an arcuate cross-sectional configuration.

13. A gear set selection system as set forth in any of the preceding claims, wherein motion transmitting device (32) includes at least one dampener (88) positioned between said first and second terminal ends (82, 84), with said dampener (88) elastically deforming during movement of said shift lever (60).

14. A gear set selection system as set forth in any of the preceding claims, wherein said shift lever (60) moves in at least two different directions and wherein said motion transmitting device (32) includes a first cable (86A) coupled to said shift lever (60) and said selector (46) to transfer movement of said shift lever (60) when moving in said first direction, and a second cable (86B) coupled to said shift lever (60) and said selector (46) to transfer movement of said shift lever (60) when moving in said second direction.

15. A gear set selection system as set forth in any of the preceding claims, wherein said shifter assembly (34) includes a plunger (94) disposed in said shift lever (60) biased to extend from said second end (64) to abut said guide (68) to maintain continuous contact between said shift lever (60) and said guide (68) as said shift lever (60) moves between said first and second tracks (74A, 74B) about said projection (72).

16. A gear set selection system as set forth in claim 15, wherein each of said first and second tracks (74A, 74B) have a depth and said plunger (94) has a plunger end (96) with a hemispherical configuration defining a radius, said depth of said first and second tracks (74A, 74B) is greater than said radius of said plunger end (96) such that said plunger end (96) remains in said first and second tracks (74A, 74B) as said shift lever (60) moves from said first track (74A) to said second track (74B) about said projection (72).

17. A gear set selection system as set forth in any of the preceding claims, wherein said first projection length of travel (76L) of said first side is 32.23 mm and said first protrusion length of travel (52L) of said first wall (76) is 5.11 mm to define a first ratio of 6.31, wherein said second projection length of travel (78L) of said second side is 39.99 mm and said second protrusion length of travel (54L) of said second wall (54) is 6.45 mm to define a second ratio of 6.2, and wherein a third projection length of travel (80L) of said third side (80) is 7.87 mm and a third protrusion length of travel (56L) of said third wall (56) is 2.09 mm to define a second ratio of 3.77.

## Patentansprüche

1. Zahnradsatzauswahlsystem (30) für ein Fahrzeug mit:
einem Getriebeaufbau (32) mit:
einem ersten Zahnradsatz und einem zweiten Zahnradsatz, die auf Abstand zueinander liegen,
einer Übertragungsplatte (40) mit einem Überstand und einem dem ersten Zahnradsatz zugeordneten ersten Weg (50A) und einem dem zweiten Zahnradsatz zugeordneten zweiten Weg (50B), wobei der zweite Weg (50B) durch den Überstand (48) von dem ersten Weg (50A) getrennt ist und wobei der Überstand (48) eine erste, dem ersten Weg (50A) zugewandte Wand (52) und eine zweite, dem zweiten Weg (50B) zugewandet Wand (54) definiert, wobei eine dritte Wand (56) die ersten und zweiten Wände (52, 54) miteinander verbindet, und
einem Selektor (46), der in der Getriebeplatte (40) angeordnet und um den Überstand (48) zwischen den ersten und zweiten Wegen (50A, 50B) beweglich ist, um zwischen den ersten und zweiten Zahnradsätzen umzuschalten, und
einem Schaltaufbau (34) mit:
einem Gehäuse (58),
einem Schalthebel (60), der mit dem Gehäuse (58) gekoppelt ist und ein erstes Ende (62) und ein zweites Ende (64) hat, die sich auf Abstand zueinander befinden,
einem Rotationsmechanismus (66), der mit dem Gehäuse (58) und dem Schalthebel (60) zwischen den Enden (62, 64) gekoppelt ist, um den Schalthebel an dem Gehäuse (58) zu lagern,
einer auf Abstand zu dem Rotationsmechanismus (66) mit dem Gehäuse (58) gekoppelte Führung (68), wobei die Führung (68) einen Vorsprung (72) und eine erste, dem ersten Weg (50A) zugeordnete Bahn (74A) und eine zweite, dem zweiten Weg (50B) zugeordnete Bahn (74B) hat, wobei die zweite Bahn (74B) durch den Vorsprung (72) von der ersten Bahn (74A) getrennt ist und wobei der Vorsprung (72) eine erste, der ersten Bahn (74A) zugewandt Seite (76) und eine zweite, der zweiten Bahn (74B) zugewandt Seite (78) definiert, wobei eine dritte Seite (80) die ersten und zweiten Seiten (76, 78) miteinander verbindet, und
wobei der Schalthebel (60) in der Führung (68) liegt und um den Vorsprung (72) zwischen den ersten und zweiten Bahnen (74A, 74B) beweglich ist, um die Bewegung des Selektors (46) zwischen den ersten und zweiten Bahnen (50A, 50B) zu ermöglichen, und
einer Bewegungsübertragungseinrichtung (36) mit einem ersten Ende (82) und einem zweiten Ende (84), die auf Abstand zueinander liegen, wobei das erste Ende (82) mit dem Schalthebel (60) gekoppelt ist und das zweite Ende (84) mit dem Selektor (46) gekoppelt ist, um Bewegung von dem Schalhebel (60) auf den Selektor (46) zu übertragen, um zwischen den ersten und zweiten Zahnradsätzen umzuschalten, und
wobei eine erste Vorsprungsbewegungslänge (76L) der ersten Seite (76) und eine erste Überstandsbewegungslänge (52L) der ersten Wand (52) relativ zueinander ein erstes Verhältnis definieren und
wobei eine zweite Vorsprungsbewegungslänge (78L) der zweiten Seite (78) und eine zweite Überstandsbewegungslänge (54L) der zweiten Wand (54) relativ zueinander ein zweites Verhältnis definieren,
**dadurch gekennzeichnet, dass** das erste Verhältnis disproportional zu dem zweiten Verhältnis ist, so dass Bewegung des Schalthebels (60) aus der ersten Bahn (74A) um den Vorsprung (72) in die zweite Bahn (74B) verändert ist im Vergleich zur Bewegung des Selektors (46) aus dem ersten Weg (50A) um den Überstand (48) in den zweiten Weg (50B), um die elastische Verformung der Bewegungsübertragungseinrichtung (36) zu überwinden, um sicherzustellen, dass der Selektor (46) sich in der zweiten Bahn (50B) befindet, wenn der Schalthebel (60) sich in der zweiten Bahn (74B) befindet.

2. Zahnradsatzauswahlsystem nach einem der vorhergehenden Ansprüche, wobei das erste Verhältnis größer als das zweite Verhältnis ist, so dass die Bewegungslänge des Schalthebels (60) zwischen den ersten und zweiten Bahnen (74A, 74B) um den Vorsprung (72) größer ist als die entsprechende Bewegungslänge des Selektors (46) zwischen den ersten und zweiten Wegen (50A, 50B).

3. Zahnradsatzauswahlsystem nach einem der vorhergehenden Ansprüche, wobei die dritte Seite (80) unter einem Vorsprungswinkel (β) von der ersten Seite (76) ausgeht und die dritte Wand (56) von der ersten Wand (52) unter einem Überstandswinkel (α) ausgeht, wobei der Vorsprungswinkel(β) größer als der Überstandswinkel (α) ist.

4. Zahnradsatzauswahlsystem nach einem der vorhergehenden Ansprüche, wobei eine der Bahnen (74) eine Bahnbreite (74W) und einer der Wege (50) eine Wegbreite (50W) hat, wobei die Bahnbreite (74W) größer als die Wegbreite (50W) ist, um ein zusätzliches zweites Verhältnis zu definieren.

5. Zahnradsatzauswahlsystem nach einem der vorhergehenden Ansprüche, wobei die zweite Seite eine zweite Vorsprungsbewegungslänge (78L) und die zweite Wand (54) eine zweite Überstandsbewegungslänge (54L) hat, wobei die zweite Vorsprungsbewegungslänge (78L) größer als die zweite Überstandsbewegungslänge (54L) ist.

6. Zahnradsatzauswahlsystem nach einem der vorhergehenden Ansprüche, wobei die dritte Seite (80) eine dritte Vorsprungsbewegungslänge (80L) und die dritte Wand (56) eine dritte Überstandsbewegungslänge (56L) hat, wobei die dritte Vorsprungsbewegungslänge (80L) größer als die dritte Überstandsbewegungslänge (56L) ist.

7. Zahnradsatzauswahlsystem nach einem der vorhergehenden Ansprüche, wobei die Führung (68) eine Mehrzahl von Vorsprüngen (72) umfasst und eine Mehrzahl von Bahnen (74), die jeweils seitlich an die Mehrzahl von Vorsprüngen angrenzen (72), definiert und die Übertragungsplatte (40) eine Mehrzahl von Überständen (48) umfasst und eine Mehrzahl von Wegen (50) definiert, die jeweils seitlich an die Mehrzahl von Überständen (48) angrenzen, wobei jede der Bahnen (50) einem entsprechenden der Wege (50) zugeordnet ist.

8. Zahnradsatzauswahlsystem nach einem der vorhergehenden Ansprüche, wobei jede der ersten und zweiten Bahnen (74A, 74B) eine Tiefe hat und das zweite Ende (64) des Schalthebels (60) eine halbkugelförmige Gestalt hat, die einen Radius definiert, wobei die Tiefe der ersten und zweiten Bahnen (74A, 74B) größer als der Radius des zweiten Endes (64) ist, so dass das zweite Ende (64) in den ersten und zweiten Bahnen(74A, 74B) bleibt, wenn der Schalthebel (60) aus der ersten Bahn (74A) um den Vorsprung (72) in die zweite Bahn (74B) bewegt wird.

9. Zahnradsatzauswahlsystem nach einem der vorhergehenden Ansprüche, wobei die Führung (68) eine bogenförmige Querschnittsgestalt entlang der Bahnen (74) hat.

10. Zahnradsatzauswahlsystem nach einem der vorhergehenden Ansprüche, wobei die Führung (68) eine bogenförmige Querschnittsgestalt hat und das zweite Ende (64) des Schalthebels (60) sich während der Bewegung des Schalthebels (60) entlang der ersten und zweiten Bahnen (74A, 74B) in einem bogenförmigen Muster bewegt.

11. Zahnradsatzauswahlsystem nach einem der vorhergehenden Ansprüche, wobei die Führung (68) eine Bodenfläche (92) hat, wobei ein Schnittbereich von der Bodenfläche (92) und wenigstens einer der Seiten (76, 78, 80) eine Fase (98) hat.

12. Zahnradsatzauswahlsystem nach einem der vorhergehenden Ansprüche, wobei die Führung (68) eine Bodenfläche (92) hat, wobei ein Schnittbereich der Bodenfläche (92) und wenigstens einer der Seiten (76, 78, 80) eine Ausrundung (100) mit einer bogenförmigen Querschnittsgestalt hat.

13. Zahnradsatzauswahlsystem nach einem der vorhergehenden Ansprüche, wobei die Bewegungsübertragungseinrichtung (32) wenigstens einen Dämpfer (88) beinhaltet, der zwischen den ersten und zweiten Enden (82, 84) liegt, wobei der Dämpfer (88) sich während der Bewegung des Schalthebels (60) elastisch verformt.

14. Zahnradsatzauswahlsystem nach einem der vorhergehenden Ansprüche, wobei der Schalthebel (60) sich in wenigstens zwei verschieden Richtungen bewegt und wobei die Bewegungsübertragungseinrichtung (32) ein erstes Kabel (86A) aufweist, das mit dem Schalthebel (60) und dem Selektor (46) verbunden ist, um Bewegung des Schalthebels (60), wenn er sich in die erste Richtung bewegt, zu übertragen, und ein zweites Kabel (86B) aufweist, das mit dem Schalthebel (60) und dem Selektor (46) verbunden ist, um Bewegung des Schalthebels (60) zu übertragen, wenn er sich in die zweite Richtung bewegt.

15. Zahnradsatzauswahlsystem nach einem der vorhergehenden Ansprüche, wobei der Schaltaufbau (34) einen Kolben (94) umfasst, der in dem Schalthebel (60) angeordnet ist und weg von dem zweiten Ende (64) vorstehend vorgespannt ist, um an der Führung (68) anzuliegen, um kontinuierlich Kontakt zwischen dem Schalthebel (60) und der Führung (68) zu halten, wenn der Schalthebel (60) sich zwischen den ersten und zweiten Bahnen (74A, 74B) um den Vorsprung (72) bewegt.

16. Gangauswahlsystem nach Anspruch 15, wobei jede der ersten und zweiten Bahnen (74A, 74B) eine Tiefe hat und der Kolben (94) ein Kolbenende (96) mit einer halbkugelförmigen Gestaltung hat, die einen Radius definiert, wobei die Tiefe der ersten und zweiten Bahnen (74A, 74B) größer als der Radius des Kolbenendes (96) ist, so dass das Kolbenende (96) in den ersten und zweiten Bahnen (74A, 74B) bleibt, wenn der Schalthebel (60) sich von der ersten Bahn (74A) um den Vorsprung (72) in die zweite Bahn (74B) bewegt.

17. Gangauswahlsystem nach einem der vorhergehenden Ansprüche, wobei die erste Vorsprungsbewegungslänge (76L) der ersten Seite 32,23 mm und die erste Überstandsbewegungslänge (52L) der ersten Wand (76) 5,11 mm beträgt, um ein erstes Verhältnis von 5,631 zu definieren, wobei die zweite Vorsprungsbewegungslänge (78L) der zweiten Seite 39,99 mm und die zweite Überstandsbewegungslänge (54L) der zweiten Wand (54) 6,45 mm beträgt, um ein zweites Verhältnis von 6,2 zu definieren, und wobei eine dritte Vorsprungsbewegungslänge (80L) der dritten Seite (80) 7,87 mm und eine dritte Überstandsbewegungslänge (56L) der dritten Wand (56L) 2,09 mm beträgt, um ein zweites Verhältnis von 3,77 zu definieren.

## Revendications

1. Système de sélection de train d'engrenages (30) pour un véhicule comprenant :
un ensemble de transmission (32) ayant :
un premier train d'engrenages et un second train d'engrenages espacés l'un de l'autre,
une plaque de transmission (40) ayant une saillie (48) et un premier trajet (50A) associé audit premier train d'engrenages et un second trajet (50B) associé audit second train d'engrenages avec ledit second trajet (50B) séparé dudit premier trajet (50A) par ladite saillie (48), et ladite saillie (48) définissant une première paroi (52) en regard dudit premier trajet (50A) et une deuxième paroi (54) en regard dudit second trajet (50B) avec une troisième paroi (56) interconnectant lesdites première et deuxième parois (52, 54) et
un sélecteur (46) disposé dans ladite plaque de transmission (40) et mobile entre lesdits premier et second trajets (50A, 50B) autour de ladite saillie (48) pour commuter entre ledit premier et ledit second train d'engrenages ; et
un ensemble de déplacement (34) ayant :
un boîtier (58),
un levier de changement (60) couplé audit boîtier (58) et ayant une première extrémité (62) et une seconde extrémité (64) espacées l'une de l'autre,
un mécanisme rotatif (66) couplé audit boîtier (58) et audit levier de changement(60) entre lesdites extrémités (62, 64) pour supporter ledit levier de changement sur ledit boîtier (58),
un guide (68) couplé audit boîtier (58) espacé dudit mécanisme rotatif (66), ledit guide (68) ayant une projection (72) et une première piste (74A) associée audit premier trajet (50A) et une seconde piste (74B) associée audit second trajet (50B), avec ledit second trajet (74B) qui est séparé de ladite première piste (74A) par ladite projection (72), et ladite projection (72) définissant un premier côté (76) tourné vers ladite première piste (74A) et un deuxième côté (78) tourné vers ladite seconde piste (74B), avec un troisième côté (80) qui interconnecte lesdits premier et deuxième côtés (76, 78), et
ledit levier de changement (60) étant disposé dans ledit guide (68) et pouvant se déplacer entre lesdites première et seconde pistes (74A, 74B) autour de ladite projection (72) pour faciliter ledit déplacement dudit sélecteur (46) entre lesdits premier et second trajets (50A, 50B) ; et
un dispositif de transmission de mouvement (36) ayant une première extrémité terminale (82) et une seconde extrémité terminale (84) espacées l'une de l'autre avec ladite première extrémité terminale (82) qui est couplée audit levier de changement (60) et ladite seconde extrémité terminale (84) qui est couplée audit sélecteur (46) pour transférer le déplacement dudit levier de changement (60) vers ledit sélecteur (46) afin de commuter entre lesdits premier et second train d'engrenages ; et
dans lequel une première longueur de déplacement de projection (76L) dudit premier côté (76) et une longueur de déplacement de saillie (52L) de ladite première paroi (52) définissent un premier rapport l'un par rapport à l'autre ; et
dans lequel une seconde longueur de déplacement de projection (78L) dudit deuxième côté (78) et une seconde longueur de déplacement de saillie (54L) de ladite deuxième paroi (54) définissent un second rapport l'un par rapport à l'autre ;
**caractérisé en ce que** ledit premier rapport est disproportionné avec ledit second rapport de sorte que le déplacement dudit levier de changement (60) de ladite première piste (74A) à ladite seconde piste (74B) autour de ladite projection (72) soit modifié en comparaison du déplacement dudit sélecteur (46) dudit premier trajet (50A) audit second trajet (50B) autour de ladite saillie (48) pour pallier une déformation élastique dudit dispositif de transmission de déplacement (36) afin de s'assurer que ledit sélecteur (46) soit disposé dans ledit second trajet (50B) lorsque ledit levier de changement (60) est disposé dans ladite seconde piste (74B).

2. Système de sélection de train d'engrenages selon l'une quelconque des revendications précédentes, dans lequel ledit premier rapport est supérieur audit second rapport de sorte que la longueur de déplacement dudit levier de changement (60) entre lesdites première et seconde pistes (74A, 74B) autour de ladite projection (72) soit supérieure à la longueur de déplacement correspondante dudit sélecteur (46) entre lesdits premier et second trajets (50A, 50B).

3. Système de sélection de train d'engrenages selon l'une quelconque des revendications précédentes, dans lequel ledit troisième côté (80) s'étend dudit premier côté (76) selon un angle de projection (β) et ladite troisième paroi (56) s'étend de ladite première paroi (52) à un angle de saillie (α) avec ledit angle de projection (β) qui est supérieur audit angle de saillie (α).

4. Système de sélection de train d'engrenages selon l'une quelconque des revendications précédentes, dans lequel l'une desdites pistes (74) a une largeur de piste (74W) et l'un desdits trajets (50) a une largeur de trajet (50W) avec ladite largeur de piste (74W) qui est supérieure à ladite largeur de trajet (50W) pour définir un second rapport supplémentaire.

5. Système de sélection de train d'engrenages selon l'une quelconque des revendications précédentes, dans lequel ledit deuxième côté (78) a une seconde longueur de déplacement de projection (78L) et ladite deuxième paroi (54) a une deuxième longueur de déplacement de saillie (54L) avec ladite deuxième longueur de déplacement de projection (78L) qui est supérieure à ladite deuxième longueur de déplacement de saillie (54L).

6. Système de sélection de train d'engrenages selon l'une quelconque des revendications précédentes, dans lequel ledit troisième côté (80) a une troisième longueur de déplacement de projection (80L) et ladite troisième paroi (56) a une troisième longueur de déplacement de saillie (56L), ladite troisième longueur de déplacement de projection (80L) étant supérieure à ladite troisième longueur de déplacement de saillie (56L).

7. Système de sélection de train d'engrenages selon l'une quelconque des revendications précédentes, dans lequel ledit guide (68) comprend une pluralité de projections (72) et définit une pluralité de pistes (74) flanquant chacune de ladite pluralité de projections (72) et ladite plaque de transmission (40) comprend une pluralité de saillies (48) et définit une pluralité de trajets (50) flanquant chacun de ladite pluralité de saillies (48), avec chacune desdites pistes (50) qui est associée à l'un correspondant desdits trajets (50).

8. Système de sélection de train d'engrenages selon l'une quelconque des revendications précédentes, dans lequel chacun desdites première et seconde pistes (74A, 74B) a une profondeur et ladite seconde extrémité (64) dudit levier de changement (60) a une configuration hémisphérique définissant un rayon, ladite profondeur desdites première et seconde pistes (74A, 74B) est supérieure audit rayon de ladite seconde extrémité (64) de sorte que ladite seconde extrémité (64) reste dans lesdites première et seconde pistes (74A, 74B) lorsque ledit levier de changement (60) est déplacé de ladite première piste (74A) à ladite seconde piste (74B) autour de ladite projection (72).

9. Système de sélection de train d'engrenages selon l'une quelconque des revendications précédentes, dans lequel ledit guide (68) a une configuration arquée en coupe transversale le long desdites pistes (74).

10. Système de sélection de train d'engrenages selon l'une quelconque des revendications précédentes, dans lequel ledit guide (68) a une configuration arquée en coupe transversale et ladite seconde extrémité (64) dudit levier de changement (60) se déplace le long desdites première et seconde pistes (74A, 74B) selon un motif arqué au cours dudit déplacement dudit levier de changement (60).

11. Système de sélection de train d'engrenages selon l'une quelconque des revendications précédentes, dans lequel ledit guide (68) a une surface inférieure (92) avec une intersection de ladite surface inférieure (92) et d'au moins l'un desdits côtés (76, 78, 80) ayant un chanfrein (98).

12. Système de sélection de train d'engrenages selon l'une quelconque des revendications précédentes, dans lequel ledit guide (68) a une surface inférieure (92) avec une intersection de ladite surface inférieure (92) et d'au moins l'un desdits côtés (76, 78, 80) qui a un congé (100) avec une configuration arquée en coupe transversale.

13. Système de sélection de train d'engrenages selon l'une quelconque des revendications précédentes, dans lequel un dispositif de transmission de déplacement (32) comprend un premier amortisseur (88) positionné entre lesdites première et seconde extrémités terminales (82, 84), avec ledit amortisseur (88) qui se déforme de manière élastique au cours du déplacement dudit levier de changement (60).

14. Système de sélection de train d'engrenages selon l'une quelconque des revendications précédentes, dans lequel ledit levier de changement (60) se déplace dans au moins deux directions différentes et dans lequel ledit dispositif de transmission de déplacement (32) comprend un premier câble (86A) couplé audit levier de changement (60) et audit sélecteur (46) pour transférer le déplacement dudit levier de changement (60) lorsqu'il se déplace dans ladite première direction, et un second câble (86B) couplé audit levier de changement (60) et audit sélecteur (46) pour transférer le déplacement dudit levier de changement (60) lors de son déplacement dans ladite seconde direction.

15. Système de sélection de train d'engrenages selon l'une quelconque des revendications précédentes, dans lequel ledit ensemble de déplacement (34) comprend un plongeur (94) disposé dans ledit levier de changement (60) sollicité pour s'étendre de ladite seconde extrémité (64) afin de s'abouter sur ledit guide (68) pour maintenir un contact continu entre ledit levier de changement (60) et ledit guide (68) lorsque ledit levier de changement (60) se déplace entre lesdites première et seconde pistes (74A, 74B) autour de ladite projection (72).

16. Système de sélection de train d'engrenages selon la revendication 15, dans lequel chacune desdites première et seconde pistes (74A, 74B) a une longueur et ledit plongeur (94) a une extrémité de plongeur (96) avec une configuration hémisphérique définissant un rayon, ladite profondeur desdites première et seconde pistes (74A, 74B) est supérieure audit rayon de ladite extrémité de plongeur (96) de sorte que ladite extrémité de plongeur (96) reste dans lesdites première et seconde pistes (74A, 74B) lorsque ledit levier de changement (60) se déplace de ladite première piste (74A) à ladite seconde piste (74B) autour de ladite projection (72).

17. Système de sélection de train d'engrenages selon l'une quelconque des revendications précédentes, dans lequel ladite première longueur de déplacement de projection (76L) dudit premier côté est de 32,23 mm et ladite première longueur de déplacement de saillie (52L) de ladite première paroi (76) est de 5,11 mm pour définir un premier rapport de 6,31, dans lequel ladite deuxième longueur de déplacement de projection (78L) dudit deuxième côté est de 39,99 mm et ladite deuxième longueur de déplacement de saillie (54L) de ladite deuxième paroi (54) est de 6,45 mm pour définir un second rapport de 6,2, et dans lequel une troisième longueur de déplacement de projection (80L) dudit troisième côté (80) est de 7,87 mm et une troisième longueur de déplacement de saillie (56L) de ladite troisième paroi (56) est de 2,09 mm pour définir un second rapport de 3,77.
